# EUROPEAN PATENT SPECIFICATION

(11) **EP 4 332 195 B1**
(45) Date of publication and mention of the grant of the patent: **30.10.2024**
(21) Application number: 22193363.3
(22) Date of filing: 01.09.2022
(51) Int. Cl.: C09J 123/12, C08L 23/12, C08L 23/08

(54) **POLYPROPYLENE BASED HOT MELT ADHESIVE COMPOSITIONS**
HEISSSCHMELZKLEBSTOFFZUSAMMENSETZUNGEN AUF POLYPROPYLENBASIS
COMPOSITIONS ADHÉSIVES THERMOFUSIBLES À BASE DE POLYPROPYLÈNE

(43) Date of publication of application: 06.03.2024
(73) Proprietor: Organik Kimya Sanayi Ve Tic. A.S., 34075 Istanbul (TR)
(72) Inventor: ÖNEN, Ali, 34075 Istanbul (TR); ALPTOGA, Özge, 34075 Istanbul (TR)
(74) Representative: Müller-Boré & Partner Patentanwälte PartG mbB

(56) References cited:
- EP-A1- 3 299 431
- US-A1- 2017 015 876

## Description

The present invention relates to hot melt adhesives comprising propylene-based homopolymers and more particularly to a hot melt adhesive composition inter alia comprising a blend of at least two metallocene catalyzed polypropylene (PP)-based polymers having different viscosities and ethylene-based copolymers as defined in the appended set of claims. The hot melt adhesives of the present invention exhibit thermal resistance to aging and high and low temperature resistance which allows them to adhere different substrates.

Hot melt adhesives are solvent-free thermoplastic materials that are solid at room temperature and are applied in the melt or molten state and reach their final properties upon cooling. Hot melt adhesive compositions are often made from a variety of different base polymers such as styrenic block copolymers, polyolefins, ethylene-based (co)polymers for different applications such as packaging, hygiene, automotive, mattress, assembly and wood industry.

Suitable base polymers can be selected according to the production process and the application field. Polyolefin (ethylene or propylene based) based hot melt adhesive formulations are designed to perform well on most packaging applications because of their improved properties such as excellent thermal stability, clear appearance, fast setting, non-odor or charring, non-stringing and wide bonding range.

Over the years, different polyolefins have been used in the hot melt adhesive compositions. Amorphous poly alpha olefins (APAO) which are produced with Ziegler-Natta catalysis can be made using a variety of monomers, including but not limited to propylene, ethylene and butene. After the discovery of metallocene catalysts, polyolefins with short- or long-chain branches, different tacticities and stereoregularities have been obtained. Through metallocene catalyzed synthesis, polyolefins have been developed with tailored properties such as a narrow distribution of molecular weight and narrow melting temperature.

Propylene- or ethylene-based polymers obtained using a metallocene catalyst are widely used in hot melt formulations. However, still they can be stiff (high modulus) and high melting materials. Thus, although polyolefin based hot melt adhesives have improved properties and although through metallocene catalyzed synthesis tailored properties can be obtained, nevertheless there still needs improvements in hot melt formulations for a better performing product in packaging applications.

EP3831906 discloses a polypropylene-based adhesive and a method for producing it. Among the commercial products that can be used as the polypropylene-based resin S400, S410, S401, S600 and S901 of L-MODU (registered trademark) by Idemitsu Kosan Co. Ltd are mentioned. It is also disclosed that 2 or more kinds of polypropylene-based resin (A) can be used as combined, without any guidance on the types or the amounts.

EP3207103 discloses a hot melt adhesive made from a blend of a polypropylene-based polymer, a polyolefin elastomer, and an amorphous polyolefin. Additionally, the polypropylene component of the blend can be a mixture of one or more polypropylene random copolymers with one or more polypropylene impact copolymers.

EP3635067 discloses a hot melt adhesive composition comprising a first ethylene alpha-olefin copolymer, a second styrene block copolymer, tackifying agent, synthetic wax, a third polymer selected from ethylene-polar comonomer copolymer and propylene alpha olefin copolymer and a propylene homopolymer having a viscosity less than 100,000 mPa·s (100,000 cp), less than 50,000 mPa·s (50,000 cp), less than 20,000 mPa·s (20,000 cp) or even less than 10,000 mPa·s (10,000 cp) at 190 °C. The disclosed commercially available propylene homopolymers that are suitable are only L-MODU S400 and S410.

EP3848413 discloses a thermoplastic resin composition containing a base polymer comprising a specified propylene-based polymer A and a specified propylene-based polymer C. The base polymer may further comprise a specified ethylene-based polymer (B) and a specified linear hydrocarbon-based wax. The commercially available products as the propylene-based polymers (A) include S400, S410, S600 and S901 of L-MODU.

US2018148616 discloses a hot melt adhesive composition comprising a first polymer component having a low melting point and selected from the group consisting of a polypropylene homopolymer and a copolymer of propylene and ethylene and mixtures thereof; a second component comprising an amorphous polyolefin and a tackifying resin. Examples of polypropylene based homopolymers which display enhanced flexibility and are lower melting, are given as L-MODU S400, S600 and S901 available from Idemitsu Chemicals. The first polymer component is disclosed to be present in the adhesive composition in amounts starting from about 2% to about 50%. Mixtures of polypropylenes at these levels are mentioned as suitable.

EP3131995 discloses that polypropylene homopolymers with low isotacticity indices and melting points, such as the L-MODU S400, S600 and S900 available from Idemitsu are suitable elastomeric polyolefins.

EP3124566 discloses a base polymer for a hot melt adhesive which is a mixture of a propylene-based polymer and an olefin-based copolymer.

EP2890754 discloses a hot melt adhesive composition comprising a thermoplastic block copolymer which is a copolymer of a vinyl based aromatic hydrocarbon with a conjugated diene compound; a propylene homopolymer and an ethylene /a-olefin copolymer.

EP2921508 discloses a propylene-based polymer which can be applied as a modifier for a hot melt adhesive. The propylene based homopolymer may be composed only of one propylene homopolymer or may be a mixture of two or more propylene homopolymers having different molecular weights, stereoregularities or the like.

US2015259578 discloses hot melt adhesive compositions that include polypropylene and ethylene copolymer. The propylene polymer can be uni- or multimodal and can be a mixture of at least two different propylene polymers. It is also disclosed that useful propylene polymers exhibit a viscosity of no greater than 12,000 mPa·s (12,000 cP), no greater than about 10,000 mPa·s (10,000 cP), no greater than 8,000 mPa·s (8,000 cP), no greater than 5,000 mPa·s (5,000 cP), no greater than 3,000 mPa·s (3,000 cP), no greater than 2,000 mPa·s (2,000 cP) or even no greater than 1,000 mPa·s (1,000 cP), at 190 °C. The disclosed commercially available L-MODU propylene homopolymers are only S400, S600, S901.

US2015087760 discloses a hot melt adhesive composition comprising from 5% to 50% by weight of metallocene catalyzed random polyolefin elastomer grafted with maleic anhydride for applications that require increased hot tack, adhesion, flexibility and heat resistance above 66° C (150° F). It is also disclosed that the polyolefin elastomer may be polypropylene or polyethylene, blends of different polypropylenes, blends of different polyethylenes, or blends of polypropylenes with polyethylenes.

EP3839002 discloses a hot melt adhesive composition comprising one or more polypropylene based copolymers and metallocene catalyzed polyolefin elastomer grafted with maleic anhydride.

Further, EP3299431 discloses a hotmelt adhesive composition comprising at least one tackifying resin and a high amount of a mixture of at least one single-site catalyzed propylene homopolymer and at least one propylene copolymer, as well as an article comprising the hotmelt adhesive and to the use of the hotmelt adhesive in woodworking, assembly or coating of textiles, and a method of bonding a first base material to a second base material by means of the hotmelt adhesive.

Low molecular weight polypropylene homopolymers used in hot melt adhesive compositions of the above-mentioned prior art documents, include L-MODU S400, S600, S901 grades (manufactured by Idemitsu Chemicals with the mentioned trade names) produced with metallocene catalyst and they have moderate properties such as low modulus and high elongation which is crucial for hot melt adhesives used in packaging industry in terms of flowability and sprayability. However, a hot melt composition obtained by these grades still needs improvement in order to meet the objects required by the special applications intended with the present invention.

Thus, it is an object of the present invention to provide a novel hot melt composition with improved properties.

It is another object of the present invention to provide a hot-melt adhesive composition which is good in thermal resistance to aging and is good in high and low temperature resistance besides strong adhesiveness to various substrates.

In order to achieve the above-mentioned objects, at least 2 different low modulus polypropylene (PP)-based polymers are used together with ethylene-based polymers (copolymer and functionalized polymer) as defined in the appended set of claims and as a result high-performing hot melt adhesive compositions are produced. Combined formulation of the above mentioned at least three different polymer components already overcome some of the problems in the prior art such as adhesiveness at low temperatures, thermal stability and adhesion on different surfaces as against formulations based on the independent components or formulations based on combinations of any 2 of the components as formulated in the prior art.

According to the present invention, the hot melt adhesive composition comprises,
- at least 10% by weight of at least one metallocene catalyzed propylene-based homopolymer which has a melt viscosity higher than 8,000 mPa·s (8,000 cPs) at 190°C,
- 1 to 30% by weight of at least one metallocene catalyzed propylene-based homopolymer which has a melt viscosity lower than 8,000 mPa·s (8,000 cPs) at 190°C,
- 10 to 25% by weight of at least one ethylene-based copolymer, comprising ethylene and a comonomer selected from vinyl acetate, octene, methyl acrylate, ethyl acrylate, vinyl alcohol, n-butyl acrylate, acrylic acid, n-hexyl acrylate, methyl-methacrylate and 2-ethylhexyl acrylate,
- 0 to 4% by weight of at least one polyolefin grafted with maleic anhydride,
- at least 20% by weight of at least one tackifier resin,
- 20 to 40% by weight of at least one wax,
- 0 to 5% by weight of at least one stabilizer,
wherein the percentages are based on the weight of the total composition. The viscosity (measured by ASTM D3236-88) of the composition is equal to or less than 10,000 mPa·s (10,000 cPs) at 190° C, preferably equal to or less than 7,000 mPa·s (7,000 cPs) at 190° C., more preferably equal to or less than 5,000 mPa·s (5,000 cPs) at 190°C, and most preferably equal to or less than 3,000 mPa·s (3,000 cPs) at 190°C.

### DETAILED DESCRIPTION

The above-mentioned objects of the present invention are solved by the hot-melt adhesive composition as defined in the appended set of claims comprising, at least 2 propylene-based homopolymers with different melt viscosities at 190 °C, an ethylene-based copolymer, polyolefins grafted with maleic anhydride, a tackifying resin, a wax and a stabilizer or an antioxidant with desired additives as required to adjust properties for end-use performance.

### Propylene based homopolymer (A):

The propylene-based homopolymers used in the hot melt adhesive composition of the present invention are polypropylene homopolymers. A low-molecular weight, low density, low modulus polypropylene resulting from polymerization by metallocene catalyst can be suitably used as a base polymer for various embodiments of the hot-melt adhesive formulations of the present invention.

The L-MODU grades of polypropylene homopolymers have a unique combination of properties. For example, the melting points of L-MODU polymers are much lower than other metallocene catalyzed polypropylene homopolymers. Conventional polypropylene homopolymers tend to be very high in crystallinity and melting point whereas L-MODU grades which is developed by IDEMITSU Petrochemical, Ltd., have low crystallinity, moderate strength, low modulus and high elongation.

Different than high crystalline and amorphous polyolefins, low crystalline polypropylene homopolymers show elastic behavior with moderate strength, low modulus and high elongation. Additionally, short open time, high in flowability, easy coatibility and excellent heat stability makes low crystalline polypropylenes a good choice for hot melt formulations especially for packaging applications. By using low molecular weight and low crystalline polypropylene, stringing has also been reduced in packaging applications.

In an embodiment of the present invention the hot melt adhesive composition comprises, as base polymers, at least one propylene based homopolymer selected from the list comprising,
(A1) a polypropylene homopolymer having a melt viscosity higher than 8,000 mPa·s (8,000 cPs) at 190° C and lower than 40,000 mPa·s (40,000 cPs) at 190°C,
(A2) a polypropylene homopolymer having a melt viscosity lower than 6,000 mPa·s (6,000 cPs) at 190°C.

Comparison of polypropylene homopolymers A1 and A2 which are selected in accordance with this embodiment of the present invention are shown in the following Table 1.

In another embodiment of the present invention the melting points of polypropylene homopolymers (A1) and (A2) are less than 100° C.

By using two different polypropylene homopolymers with different viscosities; formulation viscosity can be adjusted without any concern about performance loss. It is possible to produce recipes with lower viscosity and with high performance. Low viscosity allows to lower the application temperature.

**TABLE 1 Comparison of commercial grades selected as polypropylene homopolymers A1 and A2**

| **L-MODU GRADE** | **L-MODU S300 (A1)** | **L-MODU S400 (A2)** |
|---|---|---|
| Density (kg/m) | 870 | 870 |
| DSC Melting Point (°C) | 77 | 79 |
| R&B Softening point (°C) | 91 | 93 |
| Tensile modulus (MPa) | 90 | 90 |
| Elongation at break (%) | 600 | 600 |
| Brookfield Melt viscosity: at 190°C (mPa·s (cPs)) | 4750 (4750) | 9000 (9000) |

Even though the L-MODU polymers have unique properties, their individual presence in the composition is not sufficient in order to achieve the objects of the present invention. The combination of 2 or more L-MODU grades selected based on their viscosities, improves the properties of the hot melt adhesive composition to some extent however the hot melt adhesive needs additional polymers and additives to achieve a suitable formulation with all the desired properties.

Thus, in order to achieve all the objects of the present invention, ethylene-based copolymers are used as one of the other polymer components in order to increase the cold resistance. Additionally, polyolefins grafted with maleic anhydride is selected as another polymer component to increase adhesion at different substrates.

### Ethylene based copolymer (B):

Polyolefin based adhesives are used for their advantages in packaging applications such as for their fast-setting rate and workability at low temperatures. Accordingly, improved cold temperature flexibility and resistance, improved heat resistance and good adhesion to variety of substrates can be achieved with addition of ethylene-based copolymers to the hot melt adhesive compositions of the present invention.

The terminology "ethylene-based copolymer" as used herein and throughout the specification, refers to copolymers of ethylene and a comonomer. The one or more ethylene-comonomer copolymers for the composition of the present invention are selected from ethylene vinyl acetate, ethylene-octene polymer, ethylene methyl acrylate, ethylene ethyl acrylate, ethylene-vinyl alcohol, ethylene n-butyl acrylate, ethylene acrylic acid, ethylene n-hexyl acrylate, ethylene methyl-methacrylate, ethylene 2-ethylhexyl acrylate, and combinations thereof. Ethylene vinyl acetate (EVA) is the most common polymer used in hot melt adhesives. In the hot melt adhesive formulation of the present invention, it can be used with a different VA content (from 18 to 35%) and melt index (from 25 to 800 g/10 min). In accordance with the present invention, formulations based on ethylene n-butyl acrylate (EnBA) is the most preferred for a variety of industries due to its high thermal stability and better low temperature behavior. EnBA performs better at lower temperatures due to its longer open time (thus better wet out) and lower glass transition temperature (-38°C vs. -26°C for 35% BA vs. 28% VA). Thus, ethylene n-butyl acrylate (EnBA) is the preferred ethylene-based copolymer for the present invention.

Examples of ethylene n-butyl acrylate polymers suitable for the present invention, include but are not limited to EN 33331, EN 33901 from Exxon Chemical, Ebantix E33150 and Ebantix E27150 from Repsol company, LOTRYL 35 BA 320 from Arkema company.

The ethylene n-butyl acrylate copolymers (EnBA) useful herein are those containing from 15 to 40% by weight of n-butyl acrylate having a melt index of lower than 350 g/ 10 min (ISO 1133). Preferably, the n-butyl acrylate content of the ethylene n-butyl acrylate copolymer (EnBA) is equal to lower than 35% by weight. According to an embodiment of the present invention, the ethylene n-butyl acrylate copolymer (EnBA) has a melt index of lower than 200 g/ 10 min (ISO 1133) and preferably lower than or equal to 150 g/10 min (ISO 1133).

### Polyolefins grafted with maleic anhyride (C):

Polyolefins grafted with maleic anhydride belong to the group of functionalized polyolefins. Functionalized polyolefins are olefin polymers with polar and nonpolar functionalities attached onto the polymer backbone such as ethylene, propylene, butenes and alpha olefins. Functional groups can be chosen from amide, anhydride, epoxy, sulfonate, silane.

The maleic anhydride lets the otherwise nonpolar polymers bond to various substrates and polar polymers.

Polyolefins grafted with maleic anhydride (MAH) shows excellent adhesive characteristics and increased heat stability, excellent adhesion to hard to bond substrates. The maleic anhydride provides polarity and the ability to boost adhesion making it very suitable for adhesive applications.

An example of these MAH grafted metallocene polymers suitable for the present invention include but are not limited to; Affinity GA 1000R from Dow Chemical Company; Lotader 8200, Orevac T 9305 from Arkema; A-C 573, A-C 575, A-C 596, A-C 597 from Honeywell International Inc.; Licocene PE MA 4221, Licocene PP MA 6252, Licocene PP MA 6452 from Clariant. These functional polymers are added in small amounts like additives because maleic anhydride, which has high reactivity, cannot adapt to the hot melt adhesive formulation and impairs its compatibility. In the same way, choosing polymers with low maleic anhydride ratio ensures the compatibility is not threatened.

### Tackifier resin (D):

Tackifier resins, typically have low molecular weights and have glass transition and softening point temperatures above typical room temperatures. Tackifying resins are based on natural products, for example terpenes, which are based on polymerized a- or β-pinene based compounds or petroleum-based hydrocarbon resins which are often formed by polymerization of aliphatic hydrocarbon materials to form an amorphous polymer.

Tackifying resins useful in the present invention include aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof. They are also available with differing levels of hydrogenation, or saturation, which is another commonly used term. Useful examples include Eastotac^{™} H-100, H-115 and H-130 from Eastman Chemical Co.; WINGTACK^{®} Extra, which is an aliphatic, aromatic petroleum hydrocarbon resin available from Cray Valley; WINGTACK^{®} 95, an aliphatic C-5 petroleum hydrocarbon resin available from Cray Valley; Regalite R9001 and Regalite S5100, a hydrogenated hydrocarbon resins with different degree of hydrogenation, available from Eastman Chemical Company; Escorez^{™} 5300, 5400 and 5637, partially hydrogenated cycloaliphatic petroleum hydrocarbon resins, and Escorez^{™} 5600, a partially hydrogenated aromatic modified petroleum hydrocarbon resin all available from Exxon Chemical Co; Sylvatac^{™}RE 85 and RE 95, which are 85° C and 95° C melt point rosin esters from Arizona Chemical Co.; Foral AX-E is a 80° C melt point hydrogenated rosin acid available from Eastman Chemical Company; I-MARV P-100, P-125, P-140 DCPD aromatics hydrogenated hydrocarbon resin from Idemitsu company and JH-6100, JH-6125, JH-6130 cycloaliphatic petroleum hydrocarbon resins from Jinhai Chemical Company.

These tackifying resins have a softening point, as determined by ASTM method E28-58T, of from 60°C to 160°C. Mixtures of two or more of the above described tackifying resins may be required for various formulations based on the present invention.

### Wax (E):

The presence of the wax reduces the melt viscosity of the hot-melt adhesives without considerably decreasing their adhesive bonding characteristics. These waxes are also used to reduce the open time or set-up time of the composition without affecting the temperature performance. The useful wax materials include paraffin waxes, microcrystalline waxes, polyethylene waxes, polypropylene waxes, by-product polyethylene waxes, Fischer-Tropsch waxes, oxidized Fischer-Tropsch waxes, and combinations thereof.

For example, Sasolwax C80 and Sasolwax H-1, H-4 and H-8, Fischer-Tropsch waxes available from Sasol Wax, Vestowax grades from Evonik, Sarawax SX series such as SX80, SX90, SX105 and SX110 from Shell Malaysia Ltd, Licowax series from Clariant, Viscowax series from Innospec Leuna GmbH are preferred waxes for use in the practice of the invention.

### Stabilizer (F):

The adhesives of the present invention may desirably also contain a stabilizer or antioxidant. These compounds are added to protect the adhesive from degradation caused by reaction with oxygen induced by such things as heat, light or residual catalyst from the raw materials such as the tackifying resin.

Generally, hot melt adhesive formulations are heated to between 110° C and 200° C, prior to application in order to reduce viscosity. The formulations must be stable at these high temperatures to allow for extended periods as a molten product prior to application. Antioxidants such as hindered phenols are employed in the hot melt adhesive compositions of the claimed adhesive. Representative hindered phenols include, 1,3,5-trimethyl-2,4,6-tris(3-5-di-tert-butyl-4-hydroxybenzyl)benzene; pentaerythritol tetrakis-3(3,5-di-tert-butyl-4-hydroxyphenyl)propionate; n-octadecyl-3(3,5-ditert-butyl-4-hydroxyphenyl) propionate; 4,4'-methylenebis(4-methyl-6-tert butylphenol); 4,4'-thiobis(6-tert-butyl-o-cresol); 2,6-di-tert-butylphenol; 6-(4-hydroxyphenoxy)-2,4-bis(n-ocytlthio)-1,3,5-triazine; 2,4,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octylthio)ethyl-3,5-di-tert-butyl-4-hydroxybenzoate; and sorbitol hexa-(3,3,5-di-tert-butyl-4-hydroxy-phenyl) propionate. Irganox^{®} 565, 1010, 1076 and 1726 are available from BASF Corp. and are some of the examples of useful hindered phenols.

In some embodiments of the present invention, hindered phenols may be used in combination with other antioxidants such as phosphite antioxidants like Irgafos^{®} 168 available from BASF Corp. Phosphite catalysts are considered secondary catalysts and are not generally used alone.

The present invention provides a hot melt adhesive composition for a number of applications such as product assembly and packaging, including cardboard case sealing and carton closing operations. This composition is useful for bonding a variety of substrates including virgin and recycled craft, and treated and coated craft, printed carton, cardboard, paperboard, fiberboard.

### Test Methods

### Viscosity

Viscosity was tested according to ASTM D-3236 method using a Brookfield viscometer DV-II+ and a 27 spindle.

### Softening Point

Ring & Ball softening point was measured with an automatic digital ring and ball apparatus according to ASTM E-28 method.

### Open time

Hot melt adhesive was applied as a line with MS 80 hot melt manual applicator glue gun (HAR Adhesive Technologies) and after the set time, fingers were pressed on the adhesive film and counted the time in seconds until fingerprint and separation force is diminished. The time before hardening to preserve sufficient adhesion is called open time.

### Thermal stability

Thermal stability means that the product will not darken in the glue pot with prolonged aging, will not produce char, skin or gel. High application temperatures can cause degradation which leads to char, skin, gel and gel formation, discoloration.

To determine thermal stability of the hot melt composition; 50 g of a hot melt adhesive composition is collected in a 150 mL glass bottle and heated at 175°C for 3 days. The state at this time is observed, and the heat stability of the hot melt is evaluated according to the following criteria:
1: Significant change in color, formation of char or gelling
2: Significant change in color, no char or gelling
3: Slightly change in color, no char or gelling
4: No significant change in state, no char or gelling

### Adhesion test on different surfaces at different temperatures

In order to determine the adhesion at different temperatures, hot melt adhesive was applied as a line with MS 80 hot melt manual applicator glue gun between two substrates. It is important for test results that the two surfaces are brought together quickly and that adhesion is achieved before the open time. Then, the bond specimens were placed in an oven or freezer at desired temperatures. Laminated substrates were separated by hand and the amount of fiber tear was determined. A minimum of three specimens were tested at different surfaces and temperatures and rated with a 5-point rating scale.
1 point: Very poor (No fiber tear was observed)
2 point: Poor (Small amount of fiber tear)
3 point: Average (Roughly half fiber tear)
4 point: Good (Fully fiber tear)
5 point: Excellent (Fully fiber tear- Hard to separate substrates)

Hot melts are required to exhibit full fiber tearing bonds. This means that all the fiber must be removed from the substrate along the entire length of the adhesive bead when the bond is separated by hand.

### Procedure:

Hot melt adhesive composition was produced with a 100 g scale, using the following method: An aluminum vessel was charged with wax, antioxidants and the polymer components; propylene based homopolymers L-MODU S300 and S400, ethylene-n-butyl acrylate copolymer and polyolefin grafted with maleic anhydride. Temperature was kept around 160 - 180° C. After the mixture appeared homogenous, resin and other additives were gradually added. The resultant clear molten mixture was held at target temperature until mixture appeared to be fully homogenized. After that, hot melt adhesive composition was ready to measure for the physical properties and application onto substrates. The measured properties are shown in Table 2 and Table 3:

### Examples:

**Table 2**

| | Ex.1 | Ex.2 | Ex.3 | Ex.4 | Ex.5 | Ex.6 | Ex.7 |
|---|---|---|---|---|---|---|---|
| **L-MODU S400** | 33 | 20 | | 19 | 12 | 9 | 7 |
| **L-MODU S300** | | | 30 | | 11 | 10 | 14 |
| **EnBA1** | | | | 13 | | | |
| **EnBA2** | | 15 | 15 | | 13 | 10 | 10 |
| **EVA** | | | | | | 5 | |
| **Functionalized polymer** | 3 | | | | | | 2.5 |
| **WAX1** | 10 | 21 | 16 | 21 | 21 | 21 | 21 |
| **WAX2** | **4** | | | | | | |
| **AO1** | 0.6 | 0.6 | 0.6 | 0.6 | 0.6 | 0.5 | 0.5 |
| **AO2** | | | | | | 0.5 | 0.5 |
| **RESIN1** | | | | | | | 15 |
| **RESIN2** | | 43.4 | 38.4 | 46.4 | 42.4 | 44.0 | 29.5 |
| **RESIN3** | 49.4 | | | | | | |
| **Total Amount** | **100** | **100** | **100** | **100** | **100** | **100** | **100** |
| Softening Point (°C) | 107 | 111 | 110 | 111 | 112 | 111 | 108 |
| Viscosity @ 170°C (mPa·s (cPs)) | 1438 (1438) | 1360 (1360) | 2338 (2338) | 1200 (1200) | 1688 (1688) | 1550 (1550) | 1200 (1200) |
| Viscosity @ 150°C (mPa·s (cPs)) | 2400 (2400) | 2288 (2288) | 4125 (4125) | 2050 (2050) | 2613 (2613) | 2113 (2113) | 1975 (1975) |
| Open Time(s) | 45 | 50 | 48 | 43 | 40 | 45 | 45 |
| Thermal stability (@175°C) | 3 | 3 | 3 | 3 | 3 | 4 | 4 |

**Table 3 Adhesion test on different surfaces at different temperatures**

| | **Virgin corrugated board** | | | **Hard double wall cardboard** | | | **Printed cardboard** | | | **Polyolefin film coated cardboard** | | |
|---|---|---|---|---|---|---|---|---|---|---|---|---|
| | **Adhesion @ RT** | **Adhesion @ -18°C** | **Adhesion @ 60°C** | **Adhesion @ RT** | **Adhesion @ -18°C** | **Adhesion @ 60°C** | **Adhesion @ RT** | **Adhesion @ -18°C** | **Adhesion @ 60°C** | **Adhesion @ RT** | **Adhesion @ -18°C** | **Adhesion @ 60°C** |
| Ex.1 | 5 | 5 | 5 | 5 | 5 | 5 | 4 | 0 C | 5 | 5 | 0 | 5 |
| Ex2 | 5 | 5 | 5 | 5 | 5 | 5 | 3 | 5 | 5 | 4C | 5 | 5 |
| Ex.3 | 5 | 5 | 5 | 5 | 5 | 5 | 5 | 4 | 5 | 1 | 3 | 5 |
| Ex.4 | 5 | 5 | 5 | 5 | 5 | 5 | 5 | 4 C | 5 | 4 | 5 | 5 |
| Ex.5 | 5 | 5 | 5 | 5 | 5 | 5 | 5 | 5 C | 5 | 5 | 5 | 5 |
| Ex.6 | 5 | 5 | 5 | 3 | 3 | 5 | 5 | 5 | 5 | 0 | 0 | 5 |
| Ex.7 | 5 | 5 | 5 | 5 | 5 | 5 | 5 | 5 | 5 | 5 | 5 | 5 |

| | | | | | | | | | | | | |
|---|---|---|---|---|---|---|---|---|---|---|---|---|
| C: Adhesive is cracked on surface | | | | | | | | | | | | |

## Claims

1. A hot melt adhesive composition comprising,
- at least 10% by weight of at least one metallocene catalyzed propylene-based homopolymer which has a melt viscosity higher than 8,000 mPa·s (8,000 cPs) at 190°C,
- 1 to 30% by weight of at least one metallocene catalyzed propylene-based homopolymer which has a melt viscosity lower than 8,000 mPa·s (8,000 cPs) at 190°C,
- 10 to 25% by weight of at least one ethylene-based copolymer, comprising ethylene and a comonomer selected from vinyl acetate, octene, methyl acrylate, ethyl acrylate, vinyl alcohol, n-butyl acrylate, acrylic acid, n-hexyl acrylate, methyl-methacrylate and 2-ethylhexyl acrylate,
- 0 to 4% by weight of at least one polyolefin grafted with maleic anhydride,
- at least 20% by weight of at least one tackifier resin,
- 20 to 40% by weight of at least one wax,
- 0 to 5% by weight of at least one stabilizer,
wherein the percentages are based on the weight of the total composition.

2. The hot melt adhesive composition of claim 1 comprising,
at least 10% by weight of at least one metallocene catalyzed propylene based homopolymer having a melt viscosity higher than 8,000 mPa·s (8,000 cPs) at 190° C and lower than 40,000 mPa·s (40,000 cPs) at 190°C and
1 to 30% by weight of at least one metallocene catalyzed polypropylene homopolymer having a melt viscosity lower than 6,000 mPa·s (6,000 cPs) at 190°C.

3. The hot melt adhesive composition according to claims 1 or 2 wherein the ethylene-based copolymer comprises at least 60% by weight of ethylene and less than or equal to 40% by weight of the comonomer.

4. The hot melt adhesive composition according to claims 1 to 3 wherein the ethylene-based copolymer is ethylene n-butyl acrylate copolymer (EnBA).

5. The hot melt adhesive composition according to anyone of preceding claims wherein the amount of polyolefin grafted with maleic anhydride is 0,1 to 4%, by weight of the total composition.

6. The hot melt adhesive composition according to anyone of preceding claims wherein the polyolefin grafted with maleic anhydride is metallocene catalyzed.

7. The hot melt adhesive composition according to anyone of preceding claims wherein the at least one wax is selected from paraffin waxes, microcrystalline waxes, polyethylene waxes, polypropylene waxes, by-product polyethylene waxes, Fischer-Tropsch waxes, oxidized Fischer-Tropsch waxes, and combinations thereof.

8. The hot melt adhesive composition according to anyone of preceding claims wherein the at least one tackifier resin is selected from aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and combinations thereof.

9. The hot melt adhesive composition according to claim 8 wherein the at least one tackifier resin has a softening point, as determined by ASTM method E28-58T, of from 60°C to 160°C.

10. The hot melt adhesive composition according to anyone of preceding claims wherein the viscosity of the composition at 190 °C is equal to or less than 3,000 mPa·s (3,000 cPs) or 5,000 mPa·s (5000 cPs) or 7,000 mPa·s (7000 cPs) or 10,000 mPa·s (10,000 cPs).

11. The hot melt adhesive composition according to anyone of preceding claims wherein the propylene-based homopolymers have a weight average molecular weight (Mw) of 10,000 to 55,000.

12. The hot melt adhesive composition according claim 11 wherein the propylene based homopolymers have a weight average molecular weight (Mw) of 15,000 to 45,000.

13. Use of the hot melt adhesive composition of anyone of preceding claims for product assembly and packaging applications, including cardboard case sealing and carton closing operations.

14. Use of the hot melt adhesive composition of anyone of claims 1 to 12 for bonding a variety of substrates including virgin and recycled craft, and treated and coated craft, printed carton, cardboard, paperboard, fiberboard.

## Patentansprüche

1. Heißschmelzklebstoffzusammensetzung, umfassend
- mindestens 10 Gew.-% mindestens eines Metallocen-katalysierten Homopolymers auf Propylenbasis, das eine Schmelzviskosität von höher als 8.000 mPa · s (8.000 cPs) bei 190°C aufweist,
- 1 bis 30 Gew.-% mindestens eines Metallocen-katalysierten Homopolymers auf Propylenbasis, das eine Schmelzviskosität von weniger als 8.000 mPa s (8.000 cPs) bei 190°C aufweist,
- 10 bis 25 Gew.-% mindestens eines Copolymers auf Ethylenbasis, umfassend Ethylen und ein Comonomer, ausgewählt aus Vinylacetat, Octen, Methylacrylat, Ethylacrylat, Vinylalkohol, n-Butylacrylat, Acrylsäure, n-Hexylacrylat, Methylmethacrylat und 2-Ethylhexylacrylat,
- 0 bis 4 Gew.-% mindestens eines mit Maleinsäureanhydrid gepfropften Polyolefins,
- mindestens 20 Gew.-% mindestens eines Klebharzes,
- 20 bis 40 Gew.-% mindestens eines Wachses,
- 0 bis 5 Gew.-% mindestens eines Stabilisators,
wobei sich die Prozentangaben auf das Gewicht der Gesamtzusammensetzung beziehen.

2. Heißschmelzklebstoffzusammensetzung nach Anspruch 1, umfassend
mindestens 10 Gew.-% mindestens eines Metallocen-katalysierten Homopolymers auf Propylenbasis mit einer Schmelzviskosität von höher als 8.000 mPa s (8.000 cPs) bei 190°C und weniger als 40.000 mPa s (40.000 cPs) bei 190°C und
1 bis 30 Gew.-% mindestens eines Metallocen-katalysierten Polypropylenhomopolymers mit einer Schmelzviskosität von weniger als 6.000 mPa · s (6.000 cPs bei 190°C.

3. Heißschmelzklebstoffzusammensetzung gemäß Anspruch 1 oder 2, wobei das Copolymer auf Ethylenbasis mindestens 60 Gew.-% Ethylen und weniger als oder gleich 40 Gew.-% des Comonomers umfasst.

4. Heißschmelzklebstoffzusammensetzung gemäß den Ansprüchen 1 bis 3, wobei das Copolymer auf Ethylenbasis ein Ethylen-n-Butylacrylat-Copolymer (EnBA) ist.

5. Heißschmelzklebstoffzusammensetzung nach einem der vorhergehenden Ansprüche, wobei die Menge des mit Maleinsäureanhydrid gepfropften Polyolefins 0,1 bis 4 Gew.-% der Gesamtzusammensetzung beträgt.

6. Heißschmelzklebstoffzusammensetzung nach einem der vorhergehenden Ansprüche, wobei das mit Maleinsäureanhydrid gepfropfte Polyolefin metallocenkatalysiert ist.

7. Heißschmelzklebstoffzusammensetzung nach einem der vorhergehenden Ansprüche, wobei das mindestens eine Wachs aus Paraffinwachsen, mikrokristallinen Wachsen, Polyethylenwachsen, Polypropylenwachsen, Polyethylenwachsen als Nebenprodukt, Fischer-Tropsch-Wachsen, oxidierten Fischer-Tropsch-Wachsen und Kombinationen davon ausgewählt ist.

8. Heißschmelzklebstoffzusammensetzung nach einem der vorhergehenden Ansprüche, wobei das mindestens eine Klebharz aus aliphatischen, cycloaliphatischen und aromatischen Kohlenwasserstoffen und modifizierten Kohlenwasserstoffen und hydrierten Versionen; Terpenen und modifizierten Terpenen und hydrierten Versionen; und Kolophonium und Kolophoniumderivaten und hydrierten Versionen; und Kombinationen davon ausgewählt ist.

9. Heißschmelzklebstoffzusammensetzung nach Anspruch 8, wobei das mindestens eine Klebharz einen Erweichungspunkt, bestimmt nach der ASTM-Methode E28-58T, von 60°C bis 160°C aufweist.

10. Heißschmelzklebstoffzusammensetzung nach einem der vorhergehenden Ansprüche, wobei die Viskosität der Zusammensetzung bei 190°C gleich oder weniger als 3.000 mPa · s (3.000 cPs) oder 5.000 mPa · s (5.000 cPs) oder 7.000 mPa · s (7.000 cPs) oder 10.000 mPa · s (10.000 cPs) ist.

11. Heißschmelzklebstoffzusammensetzung nach einem der vorhergehenden Ansprüche, wobei die Homopolymere auf Propylenbasis ein gewichtsmittleres Molekulargewicht (Mw) von 10.000 bis 55.000 aufweisen.

12. Heißschmelzklebstoffzusammensetzung gemäß Anspruch 11, wobei die Homopolymere auf Propylenbasis ein gewichtsmittleres Molekulargewicht (Mw) von 15.000 bis 45.000 aufweisen.

13. Verwendung der Heißschmelzklebstoffzusammensetzung nach einem der vorhergehenden Ansprüche für Produktmontage- und Verpackungsanwendungen, einschließlich Kartonversiegelungs- und Schachtelschließvorgängen.

14. Verwendung der Heißschmelzklebstoffzusammensetzung nach einem der Ansprüche 1 bis 12 zum Verkleben einer Vielzahl von Substraten, einschließlich neuem und recyceltem Kunsthandwerk sowie behandeltem und beschichtetem Kunsthandwerk, bedrucktem Karton, Pappe, Pappe und Faserplatten.

## Revendications

1. Composition d'adhésif thermofusible comprenant
- au moins 10 % en poids d'au moins un homopolymère à base de propylène à catalyseur métallocène qui a une viscosité à l'état fondu de 8000 mPa s (8000 cPs) à 190 °C,
- 1 à 30 % en poids d'au moins un homopolymère à base de propylène à catalyseur métallocène qui a une viscosité à l'état fondu inférieure à 8000 mPa·s (8000 cPs) à 190 °C,
- 10 à 25 % en poids d'au moins un copolymère à base d'éthylène, comprenant de l'éthylène et un comonomère sélectionné parmi l'acétate de vinyle, l'octène, l'acrylate de méthyle, l'acrylate d'éthyle, l'alcool vinylique, l'acrylate de n-butyle, l'acide acrylique, l'acrylate de n-hexyle, le méthylméthacrylate et l'acrylate de 2-éthylhexyle,
- 0 à 4 % en poids d'au moins une polyoléfine greffée avec un anhydride maléique,
- au moins 20 % en poids d'au moins une résine poisseuse,
- 20 à 40 % en poids d'au moins une cire,
- 0 à 5 % en poids d'au moins un stabilisant,
dans laquelle les pourcentages sont basés sur le poids de la composition totale.

2. Composition d'adhésif thermofusible selon la revendication 1, comprenant
au moins 10 % en poids d'au moins un homopolymère à base de propylène à catalyseur métallocène ayant une viscosité à l'état fondu supérieure à 8000 mPa·s (8000 cPs) à 190 °C et inférieure à 40 000 mPa·s (40 000 cPs) à 190 °C et
1 à 30 % en poids d'au moins un homopolymère de polypropylène à catalyseur métallocène ayant une viscosité à l'état fondu inférieure à 6000 mPa s (6000 cPs) à 190 °C.

3. Composition d'adhésif thermofusible selon la revendication 1 ou 2, dans laquelle le copolymère à base d'éthylène comprend au moins 60 % en poids d'éthylène et une proportion inférieure ou égale à 40 % en poids du comonomère.

4. Composition d'adhésif thermofusible selon les revendications 1 à 3, dans laquelle le copolymère à base d'éthylène est un copolymère d'éthylène n-butyle acrylate (EnBA).

5. Composition d'adhésif thermofusible selon l'une quelconque des revendications précédentes, dans laquelle la quantité de polyoléfine greffée avec un anhydride maléique est de 0,1 à 4 % en poids de la composition totale.

6. Composition d'adhésif thermofusible selon l'une quelconque des revendications précédentes, dans laquelle la polyoléfine greffée avec un anhydride maléique est à catalyseur métallocène.

7. Composition d'adhésif thermofusible selon l'une quelconque des revendications précédentes, dans laquelle l'au moins une cire est sélectionnée parmi des cires de paraffine, cires microcristallines, cires de polyéthylène, cires de polypropylène, cires de polyéthylène sous-produit, cires de Fischer-Tropsch, cires de Fischer-Tropsch oxydées, et des combinaisons de celles-ci.

8. Composition d'adhésif thermofusible selon l'une quelconque des revendications précédentes, dans laquelle l'au moins une résine poisseuse est sélectionnée parmi des hydrocarbures aliphatiques, cycloaliphatiques et aromatiques et des hydrocarbures modifiés et des versions hydrogénées ; des terpènes et des terpènes modifiés et des versions hydrogénées ; et des colophanes et des dérivés de colophane et des versions hydrogénées ; et des combinaisons de ceux-ci.

9. Composition d'adhésif thermofusible selon la revendication 8, dans laquelle l'au moins une résine poisseuse a un point de ramollissement, tel que déterminé par le procédé ASTM E28-58T, allant de 60°C à 160 °C.

10. Composition d'adhésif thermofusible selon l'une quelconque des revendications précédentes, dans laquelle la viscosité de la composition à 190 °C est inférieure ou égale à 3000 mPa·s (3000 cPs) ou 5000 mPa·s (5000 cPs) ou 7000 mPa s (7000 cPs) ou 10 000 mPa·s (10 000 cPs).

11. Composition d'adhésif thermofusible selon l'une quelconque des revendications précédentes, dans laquelle les homopolymères à base de propylène ont un poids moléculaire moyen en poids (Mw) de 10 000 à 55 000.

12. Composition d'adhésif thermofusible selon la revendication 11, dans laquelle les homopolymères à base de propylène ont un poids moléculaire moyen en poids (Mw) de 15 000 à 45 000.

13. Utilisation de la composition d'adhésif thermofusible selon l'une quelconque des revendications précédentes pour des applications d'assemblage et d'emballage de produits, y compris le scellement de caisses en carton et des opérations de fermeture de caisses en carton.

14. Utilisation de la composition d'adhésif thermofusible selon l'une quelconque des revendications 1 à 12 pour l'assemblage d'une variété de substrats, y compris d'artisanat vierge et recyclé, et d'artisanat traité et enduit, de caisse en carton imprimé, de carton, de carton blanchi, de panneau de fibres.
